# EUROPÄISCHE PATENTSCHRIFT

(11) **EP 1 295 096 B1**
(45) Veröffentlichungstag und Bekanntmachung des Hinweises auf die Patenterteilung: **13.06.2007**
(21) Anmeldenummer: 01960422.2
(22) Anmeldetag: 28.06.2001
(51) Int. Cl.: G01L 19/04

(54) **DRUCKMITTLER**
PRESSURE TRANSMITTER
DISPOSITIF DE TRANSMISSION DE PRESSION

(30) Priorität: 30.06.2000 DE 10031120
(43) Veröffentlichungstag der Anmeldung: 26.03.2003
(73) Patentinhaber: VEGA Grieshaber KG, 77709 Wolfach (DE)
(72) Erfinder: BOEHLER, Ewald, 77709 Wolfach (DE); JACOB, Jörn, 77709 Wolfach (DE)
(74) Vertreter: Göhring, Robert
(86) Internationale Anmeldenummer: PCT/EP2001/007442
(87) Internationale Veröffentlichungsnummer: WO 2002/004910

(56) Entgegenhaltungen:
- DE-U- 7 603 126
- US-A- 3 999 435
- US-A- 5 095 755

## Beschreibung

Die Erfindung betrifft einen Druckmittler der im Oberbegriff des Patentanspruchs 1 genannten Art.

Solche Druckmittler sind z.B. aus US 5,095,755 oder US 3,999,435 bekannt.

Druckmessvorrichtungen bestehen typischerweise aus einem Druckmittler und einem mit dem Druckmittler gekoppelten Drucksensor. Über den Druckmittler wird die Druckmessvorrichtung von außen mit einem zu messenden Druck beaufschlagt, der dann vom Drucksensor gemessen werden kann. Der Druckmittler dient häufig als Schutzvorlage für den sehr viel empfindlicheren Drucksensor. Der Druckmittler weist in der Richtung des Verfahrensmediums eine Trennmembran auf, die den Druckmittler nach außen hin abschließt und die mit dem Grundkörper des Druckmittlers eine Kammer im Inneren des Druckmittlers, in der ein Druckübertragungsmedium vorgesehen ist, definiert. Die Werkstoffe des die Kammer ausbildenden Grundkörpers und Trennmembran weisen typischerweise einen deutlich geringeren Temperaturausdehnungskoeffizienten auf wie das Druckübertragungsmedium. Bei Temperaturveränderungen der Umgebung kommt es aufgrund dieser unterschiedlichen Temperaturausdehnungskoeffizienten zu unterschiedlichen Ausdehnungen von Grundkörper, Trennmembran und Druckübertragungsmedium.

Problematisch ist hier, dass die dadurch verursachten unterschiedlichen temperaturbedingten Volumenänderungen der Kammer und des Druckübertragungsmediums zu mitunter sehr großen Messfehler führen.

Um diesen temperaturbedingten Messfehler zu reduzieren, werden Druckmittler bereitgestellt, die eine Trennmembran mit verhältnismäßig großer Fläche an der Verfahrenseite aufweisen. Alternativ oder zusätzlich wird auch das Volumen des Druckübertragungsmediums in der Kammer verringert. Allerdings lässt sich das Volumen des Druckübertragungsmediums aufgrund des angestrebten Messbereiches des Drucksensors bzw. dessen Messtoleranzen nicht beliebig reduzieren. Darüber hinaus wird häufig ein Druckmittler mit sehr kleinem Trennmembrandurchmesser benötigt, wodurch allein schon aus Platzgründen an die flächenmäßige Dimensionierung der Trennmembran Grenzen gesetzt sind.

In der GM 76 03 126 ist ein gattungsgemäßer Druckmittler beschrieben, bei dem in der Kammer des Grundkörpers des Druckmittlers ein Ausgleichsteil mit einem minimalen Ausdehnungskoeffizienten integriert ist, der eine Volumensausdehnung des Druckübertragungsmediums kompensieren soll. Ein derartiger Druckmittler ist jedoch herstellungstechnisch sehr schwierig zu verwirklichen. Darüber hinaus ist die Justierung dieses temperaturkompensierten Druckmittlers, dass heißt die genaue Einstellung des Verhältnisses von Druckübertragungsmedium und Ausgleichskörper überaus aufwendig. Schließlich ist es, insbesondere bei Druckmessumformern zur Messung von Drücken im Millibarbereich, erforderlich, dass der Druckmittler den von außen aufgenommenen Druck verlässlich und gleichmäßig auf den nachgeschalteten Drucksensor überträgt. Dies ist jedoch mit dem in der GM 76 03126 beschriebenen Druckmittler, in dem das Ausgleichsteil frei schwimmend in der Kammer angeordnet ist, nicht oder nur begrenzt möglich.

Der vorliegenden Erfindung liegt daher die Aufgabe zugrunde, einen temperaturkompensierten Druckmittler anzugeben, der eine möglichst geringe Fläche der Trennmembran aufweist.

Erfindungsgemäß wird diese Aufgabe durch einen Druckmittler mit den Merkmalen des Patentanspruchs 1 gelöst.

Demgemäß wird ein gattungsgemäßen Druckmittler bereitgestellt, der dadurch gekennzeichnet ist, dass die Temperaturausdehnungskoeffizienten der Trennmembran und des Grundkörpers und der Temperaturausdehnungskoeffizient des Druckübertragungsmediums derart ausgelegt sind, dass eine thermisch bedingte Volumenänderung des zusammenhängenden Raumes gleich oder mindestens annähernd gleich einer thermisch bedingten Volumenänderung des Druckübertragungsmediums ist.

Mit diesen Maßnahmen lässt sich auf einfache Weise eine in weiten Bereichen optimale Temperaturkompensation des Druckmittlers und damit des Druckmessumformers erzielen. Der besondere Vorteil des erfindungsgemäßen Druckmittlers besteht darin, dass zur Verwirklichung der Temperaturkompensation keine Vergrößerung des Druckmittlerkopfes erforderlich ist. Darüber hinaus sind hier fertigungstechnisch keine aufwendigen zusätzlichen Prozessschritte notwendig. Ist ein Druckmittler einmal spezifiziert - dass heißt über die geeignete Wahl der Temperaturausdehnungskoeffizienten kompensiert sich das Kompensationsvolumens der Trennmembran und die Volumenzunahme des Druckübertragungsmediums gegenseitig -, dann ist für die Herstellung des Druckmittlers kein zusätzlicher Herstellungsschritt erforderlich.

Vorteilhafterweise ist die Trennmembran zumindest in den radial äußeren Bereichen der Trennmembran wellig ausgebildet. Bei zunehmender Temperatur nimmt die Welligkeit der Trennmembran ab, was zu einer Volumenerhöhung, dem sogenannten Kompensationsvolumen, führt. Über die Welligkeit kann so die Kompensation bei einer vorgegebenen temperaturbedingten Volumenzunahme gezielt eingestellt werden.

Die Druckmittlerköpfe weisen vorteilhafterweise einen runden Querschnitt der Trennmembran auf. Selbstverständlich lassen sich auch Trennmembrane mit andere Formen des Druckmittlerkopfes - zum Beispiel oval, hexagonal, quadratisch - realisieren, jedoch ist die runde Form vor allem für die Druckmessung im Millibarbereich die weitaus exakteste. Es lassen sich damit vorteilhafter vollkompensierte Druckmittler bereitstellen, bei denen die Trennmembran einen Durchmesser von weniger 40 mm aufweist.

Typischerweise besteht der Grundkörper und die Trennmembran zumindest zum Teil aus einem korrosionsbeständigen metallischen Werkstoff. Vorzugsweise wird hier Edelstahl verwendet. Es wäre jedoch auch denkbar, dass die Trennmembran und/oder der Grundkörper aus Keramik oder keramikähnlichem Material ausgebildet sind. Als Druckübertragungsmedium wird typischerweise ein Öl, beispielsweise Hydrauliköl oder Silikonöl, verwendet. Es könnte jedoch auch jede andere Flüssigkeit oder sogar ein Gas verwendet werden.

Der Grundkörper und die Trennmembran weisen typischerweise einen sehr viel geringeren Temperaturausdehnungskoeffizienten als das Druckübertragungsmedium auf. Üblicherweise liegt der Temperaturausdehnungskoeffizient im Bereich von 10 - 100 10⁻⁶ K⁻⁶ für einen Temperaturbereich von 20 - 100°C und ist damit etwa um den Faktor 10 bis 1000 kleiner als der des Druckübertragungsmediums.

Weitere vorteilhafte Ausgestaltungen und Weiterbildungen der Erfindung sind den Unteransprüchen und der Beschreibung unter Bezugnahme auf die Figur zu entnehmen.

Die Erfindung wird nachfolgend anhand der in der Figur der Zeichnung angegebenen Ausführungsbeispiele näher erläutert. Es zeigen:

Die Figur zeigt einen Teilschnitt eines erfindungsgemäßen Druckmittlers. Mit 1 ist der Druckmittler eines Druckmessumformers bezeichnet. Der Druckmittler 1 weist einen metallischen Druckmittlergrundkörper 2 auf, der vorzugsweise aus korrosionsfreiem, oxidationsbeständigen Material besteht. Der Grundkörper 2 könnte jedoch auch zumindest teilweise aus einem anderen Werkstoff, beispielsweise einem keramischen Werkstoff, bestehen. Der Grundkörper 2 weist auf der Sensorseite 3 einen Flansch 4 auf, der den Druckmittler 1 mit einem in der Figur nicht dargestellten Drucksensor verbindet.

Auf der Verfahrensseite 5 weist der Druckmittler 1 eine Trennmembran 6, die in einer Ausnehmung 7 des Grundkörpers 2 angeordnet ist, auf. Die Trennmembran 6 ist derart in der Ausnehmung 7 angeordnet, dass zwischen Trennmembran 6 und Grundkörper 2 eine Kammer 8 ausgebildet ist. Ferner weist der Grundkörper 2 des Druckmittlers 1 eine Bohrung 9 auf, die sowohl mit der Kammer 8 als auch mit dem Flansch 4 verbunden ist. In dem zusammenhängenden Raum 8, 9 bestehend aus der Kammer 8 und Bohrung 9 ist ein Druckübertragungsmedium, z. B. eine Ölfüllung, eingebracht. Die Trennmembran 6 trennt das verfahrensseitig anstehende Medium (in der Figur nicht dargestellt) von dem Druckübertragungsmedium im Inneren des zusammenhängenden Raumes 8, 9. Über die Trennmembran 6 lässt sich ein verfahrensseitig anliegender Druck auf das Druckübertragungsmedium und somit auf den nachgeschalteten Drucksensor übertragen.

Der Druckmittlerkopf und damit auch die Trennmembran 6 weisen im vorliegenden Ausführungsbeispiel einen im wesentlichen kreisrunden Querschnitt auf. Die Trennmembran 6 ist zumindest in den radial äußeren Bereichen der Trennmembran 6 wellig ausgebildet ist.

Die neuartige Ausgestaltung des erfindungsgemäßen Druckmittlers 1 sowie dessen Funktionsweise soll nachstehend anhand des Ausführungsbeispiels näher erläutert werden:

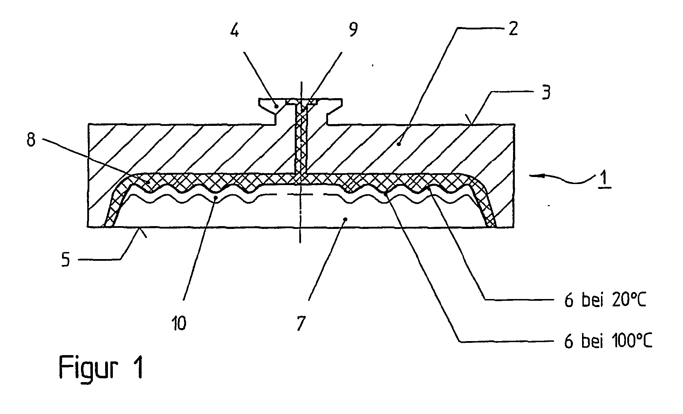

Der Grundkörper 2 des Druckmittlers 1 und die Trennmembran 6 bestehen aus einem Material, welches typischerweise einen sehr viel kleineren Temperaturausdehnungskoeffizienten aufweist als das Druckübertragungsmedium. Bei sich ändernden Temperaturen wird die Trennmembran 6 radial gestaucht oder gestreckt. Steigt die Temperatur von z. B. T = 20°C auf z. B. T = 100° C, wird die Trennmembran 6 gestreckt (vgl. gestrichelte Linie in Fig. 1), was zu einer Vergrößerung des Volumens der Kammer 8 führt. Bei sinkenden Temperaturen wird die Trennmembran 6 hingegen wieder gestaucht, was eine Volumenreduzierung der Kammer 8 zur Folge hat. Aus der Volumendifferenz zwischen gestauchter und gestreckter Trennmembran 6 ergibt sich ein Kompensationsvolumen 10. Gleichzeitig kommt es bei steigenden und sinkenden Temperaturen auch zu einer Volumenzunahme bzw. Volumenabnahme des Druckübertragungsmediums, also z. B. der oben erwähnten Ölfüllung.

Erfindungsgemäß ist das gesamte Volumen des Druckübertragungsmediums sowie die Temperaturausdehnungskoeffizenten der verwendeten Materialien von Grundkörper 2 und Trennmembran 6 nun so angepasst, dass die temperaturbedingte Veränderung des Volumens des Druckübertragungsmediums gleich groß ist, oder mindestens annähernd gleich groß ist, wie eine temperaturbedingte Veränderung des Kompensationsvolumens 10. Erfindungsgemäß wird so ein in weiten Bereichen temperaturkompensierter Druckmittler 1 bereitgestellt, wobei das geschlossene hydraulische oder pneumatische System des Druckmittlers 1 dann temperaturkompensiert ist, wenn die bei einer Temperaturerhöhung erfolgte Volumenzunahme des Druckübertragungsmediums - unter Berücksichtigung seines speziellen Temperaturausdehnungskoeffizienten - gleich oder annähernd gleich dem Volumen ist, das sich aus der Erhöhung des Volumens des zusammenhängenden Raumes 8, 9 unter Berücksichtigung der Temperaturausdehnungskoeffizienten der Trennmembran 6 und des Grundkörpers 2 ergibt.

Die Temperaturabhängigkeit des Druckmittlers 1 kann durch folgende Maßnahmen, die auch bei sehr kleinen Messbereichen von etwa 100 mbar einsetzbar sind, nahezu auf null reduziert werden:

Zum einen lässt sich die Temperaturabhängigkeit durch geeignete Materialkombination des Grundkörpers 2 und der Trennmembran 6, zum Beispiel über die geeignete Wahl deren Temperaturausdehnungskoeffizienten, einstellen. Alternativ oder zusätzlich lässt sich über die geeignete Membranform der Trennmembran 6 die Temperaturabhängigkeit des Druckmittlers 1 weiter reduzieren.

Besonders vorteilhaft ist es ferner, wenn die Trennmembran 6 beispielsweise bei einer niedrigen Temperatur (z. B. T = 20°C) konkav ausgebildet ist und bei zunehmender Temperatur (z. B. T = 100°C) zunehmend eine konvexe Form aufweist. Darüber hinaus sind auch selbstverständlich sämtliche anderen Maßnahmen zur Reduzierung der Temperaturabhängigkeit denkbar und vorteilhaft, wie zum Beispiel die Reduzierung des Volumens des Druckübertragungsmediums, die Vergrößerung der Fläche der Trennmembran 6 sowie eine möglichst geringe Entfernung des Druckmittlers 1 zum nachgeschalteten Drucksensor. Mit diesen Maßnahmen lässt sich mithin eine in weiten Bereichen optimale Temperaturkompensation des Druckmittlers und damit des Druckmessumformers erzielen.

In einer weiteren Ausführungsforms kann die Trennmembran 6 in ihrem Außenbereich nicht gewellt ausgebildet, sondern gerade sein. Insgesamt kann die Trennmembran auch topfförmig ausgebildet sein.

### Bezugszeichenliste

- 1: Druckmittler
- 2: (Druckmittler-)Grundkörper
- 3: Sensorseite
- 4: Flansch
- 5: Verfahrensseite
- 6: Trennmembran
- 7: Ausnehmung
- 8: Kammer
- 9: Bohrung
- 10: Kompensationsvolumen

## Patentansprüche

1. Druckmittler für einen Druckmessumformer,
mit einem Grundkörper (2),
mit einer Trennmembran (6), die an einer druckempfindlichen Seite (5) des Druckmittlers (1) angeordnet ist und die von außen mit einem zu messenden Druck beaufschlagbar ist,
mit einem ein Druckübertragungsmedium aufnehmenden, zusammenhängenden Raum (8, 9) im Inneren des Grundkörpers (2), der an der druckempfindlichen Seite (5) durch die Trennmembran (6) abgeschlossen ist,
**dadurch gekennzeichnet, dass** die Temperaturausdehnungskoeffizienten der Trennmembran (6) und des Grundkörpers (2) und der Temperaturausdehnungskoeffizient des Druckübertragungsmediums derart ausgelegt sind, dass ein Temperaturanstieg zu einem Strecken der Trennmembran (6) und ein Temperatursenken zu einem Stauchen der Trennmembran (6) führt und eine hierdurch thermisch bedingte Volumenänderung des zusammenhängenden Raumes (8, 9) gleich oder zumindest annähernd gleich einer thermisch bedingten Volumenänderung des Druckübertragungsmediums ist.

2. Druckmittler nach Anspruch 1,
**dadurch gekennzeichnet, dass** die Trennmembran (6) zumindest zum Teil gewellt ausgebildet ist, wobei die Welligkeit der Trennmembran (6) mit zunehmender Temperatur abnimmt.

3. Druckmittler nach einem der vorstehenden Ansprüche,
**dadurch gekennzeichnet, dass** die Trennmembran (6) topfförmig ausgebildet ist.

4. Druckmittler nach einem der vorstehenden Ansprüche,
**dadurch gekennzeichnet, dass** die Trennmembran (6) einen runden Querschnitt mit einem Durchmesser (11) kleiner als 40 mm aufweist.

5. Druckmittler nach einem der vorstehenden Ansprüche,
**dadurch gekennzeichnet, dass** der Grundkörper (2) und/oder die Trennmembran (6) zumindest zum Teil aus einem korrosionsbeständigen metallischen Werkstoff, vorzugsweise Edelstahl, besteht/bestehen.

6. Druckmittler nach einem der vorstehenden Ansprüche,
**dadurch gekennzeichnet, dass** das Druckübertragungsmedium ein Öl, vorzugsweise ein Hydrauliköl oder ein Silikonöl, enthält.

7. Druckmittler nach einem der vorstehenden Ansprüche,
**dadurch gekennzeichnet, dass** der Grundkörper (2) und/oder die Trennmembran (6) einen um den Faktor 10 bis 1000 geringeren Temperaturausdehnungskoeffizienten als das Druckübertragungsmedium aufweist/aufweisen.

8. Druckmittler nach einem der vorstehenden Ansprüche,
**dadurch gekennzeichnet, dass** der Grundkörper (2) und/oder die Trennmembran (6) einen Temperaturausdehnungskoeffizienten im Bereich von 10 - 100 10⁻⁶ K⁻⁶ für einen Temperaturbereich von 20 - 100°C aufweist/aufweisen.

## Claims

1. Pressure transmitter for a pressure transducer,
with a main body (2),
with a separating membrane (6) which is arranged on a pressure-sensitive side (5) of the pressure transmitter (1) and can be acted upon from outside by a pressure that is to be measured,
with a linked chamber (8, 9) in the interior of the main body (2), which chamber accommodates a pressure-transmitting medium and is closed by the separating member (6) on the pressure-sensitive side (5),
**characterised in that** the thermal expansion coefficients of the separating membrane (6) and of the main body (2) and the thermal expansion coefficient of the pressure-transmitting medium are established in such a way that a temperature increase leads to stretching of the separating membrane (6) and a temperature decrease leads to contraction of the separating membrane (6) and a resulting thermally induced change in volume of the linked chamber (8, 9) is the same or at least approximately the same as a thermally induced change in volume of the pressure-transmitting medium.

2. Pressure transmitter according to claim 1, **characterised in that** the separating membrane (6) is at least partially corrugated, wherein the corrugation of the separating membrane (6) decreases as the temperature increases.

3. Pressure transmitter according to one of the preceding claims, **characterised in that** the separating membrane (6) is pot-shaped.

4. Pressure transmitter according to one of the preceding claims, **characterised in that** the separating membrane (6) has a round cross section with a diameter (11) of less than 40 mm.

5. Pressure transmitter according to one of the preceding claims, **characterised in that** the main body (2) and/or the separating membrane (6) is/are at least partially made of a corrosion-resistant metallic material, preferably stainless steel.

6. Pressure transmitter according to one of the preceding claims, **characterised in that** the pressure-transmitting medium comprises an oil, preferably a hydraulic oil or a silicone oil.

7. Pressure transmitter according to one of the preceding claims, **characterised in that** the main body (2) and/or the separating membrane (6) has/have a thermal expansion coefficient which is 10 to 1000 times lower than that of the pressure-transmitting medium.

8. Pressure transmitter according to one of the preceding claims, **characterised in that** the main body (2) and/or the separating membrane (6) has/have a thermal expansion coefficient in the range of 10 - 100 x 10⁻⁶ K⁻⁶ for a temperature range of 20 - 100°C.

## Revendications

1. Transmetteur de pression pour un convertisseur de mesure de pression, comprenant :
- un corps de base (2),
- une membrane de séparation (6) d'un côté sensible à la pression (5) du transmetteur de pression (1) et qui recevant de l'extérieur une pression à mesurer, et
- un espace communicant (8, 9) recevant un fluide transmettant la pression à l'intérieur du corps de base (2) et fermé du côté sensible à la pression (5) par la membrane de séparation (6),
**caractérisé en ce que**
les coefficients de dilatation thermique de la membrane de séparation (6) et du corps de base (2) et le coefficient de dilatation thermique du fluide transmettant la pression sont prévus pour qu'une augmentation de la température entraîne un étirement de la membrane de séparation (6) et une diminution de la température, une compression de la membrane de séparation (6), et un changement de volume de l'espace communicant (8, 9) ainsi conditionné par la température égal ou bien ou moins quasiment égal à un changement de volume du fluide transmettant la pression conditionné par la température.

2. Transmetteur de pression selon la revendication 1,
**caractérisé en ce que**
la membrane de séparation (6) est au moins partiellement ondulée, et l'ondulation de la membrane de séparation (6) diminue au fur et à mesure que la température augmente.

3. Transmetteur de pression selon l'une quelconque des revendications précédentes,
**caractérisé en ce que**
la membrane de séparation (6) est en forme de pot.

4. Transmetteur de pression selon l'une quelconque des revendications précédentes,
**caractérisé en ce que**
la membrane de séparation (6) présente une section transversale arrondie avec un diamètre (11) inférieur à 40 mm.

5. Transmetteur de pression selon l'une quelconque des revendications précédentes,
**caractérisé en ce que**
le corps de base (2) et/ou la membrane de séparation (6) est/sont composé/e(s) au moins en partie d'un matériau métallique résistant à la corrosion, de préférence de l'acier inoxydable.

6. Transmetteur de pression selon l'une quelconque des revendications précédentes,
**caractérisé en ce que**
le fluide transmettant la pression contient une huile, de préférence une huile hydraulique ou une huile de silicone.

7. Transmetteur de pression selon l'une quelconque des revendications précédentes,
**caractérisé en ce que**
le corps de base (2) et/ou la membrane de séparation (6) présente(nt) un coefficient de dilatation thermique inférieur de l'ordre du facteur 10 à 1000 par rapport à celui du fluide transmettant la pression.

8. Transmetteur de pression selon l'une quelconque des revendications précédentes,
**caractérisé en ce que**
le corps de base (2) et/ou la membrane de séparation (6) présente(nt) un coefficient de dilatation thermique dans la plage de 10 à 100.10⁻⁶ K⁻⁶ pour une plage de température de 20 à 100°C.
